(19) Europäisches Patentamt
European Patent Office
Office européen des brevets

(11) Publication number: **0 305 325 B1**

(12) # EUROPEAN PATENT SPECIFICATION

(45) Date of publication of patent specification: **08.09.93** (51) Int. Cl.5: **C08G 59/04**, C08G 59/22

(21) Application number: **88810542.6**

(22) Date of filing: **10.08.88**

(54) **Co-advanced epoxy resins from polyglycidyl ethers of polyhydric phenols and diglycidyl ethers of di-secondary alcohols.**

(30) Priority: **19.08.87 US 87563**

(43) Date of publication of application:
**01.03.89 Bulletin 89/09**

(45) Publication of the grant of the patent:
**08.09.93 Bulletin 93/36**

(84) Designated Contracting States:
**BE CH DE ES FR GB IT LI NL SE**

(56) References cited:
**EP-A- 0 022 073**
**EP-A- 0 263 067**

(73) Proprietor: **CIBA-GEIGY AG**
**Klybeckstrasse 141**
**CH-4002 Basel(CH)**

(72) Inventor: **Brytus, Vincent**
**RFD 3 Box 437 Hamlin Road**
**Mahopac New York 10541(US)**
Inventor: **Payne, Kenneth L.**
**2105 Pleasant View Avenue**
**Lansing Michigan 48911(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 305 325 B1

## Description

The so-called "advancement" of relatively low molecular weight and low-melting or liquid epoxide resins by reaction with poly-functional compounds of which the functional groups react with epoxide groups, to give relatively higher molecular weight, higher melting epoxide resins is known. Such a so-called "advancement" is above all intended to improve or modify, in the desired direction, the technical processing properties for certain end uses. For some end uses, for example in sintering powders, compression moulding powders and the like, an increase in the softening point or melting point can be desirable. Advanced epoxy resins are, for example, disclosed in U.S. -A- 4,737,553 and relate to the reaction of diglycidyl ethers of di-secondary alcohols and dihydric phenols.

The subject of the present invention is a modification of the latter advanced epoxy resin product which involves co-advancement by reacting a polyglycidyl ether of a polyhydric phenol and a diglycidyl ether of a di-secondary alcohol with a dihydric phenol. Subsequent to curing, these co-advanced resins are functional as high solids coating compositions and adhesives. These systems enhance the performance characteristics of the cured products relative to standard epoxy resin systems in terms of adhesion, flexibility, chemical resistance, salt fog corrosion resistance and mechanical properties including hardness, impact strength and mechanical strength. They also exhibit harder films and improved corrosion resistance relative to the advanced systems specifically described above.

The subject of the invention is an advanced epoxy resin resulting from the reaction of (1) a diglycidyl ether of a di-secondary alcohol, corresponding to the formula I

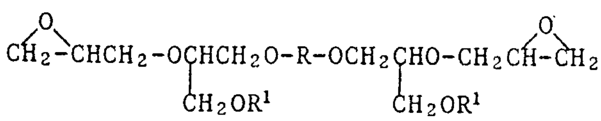

(I),

wherein R is phenylene, naphthylene or a radical consisting of two or three phenylene groups linked by one or two carbon-carbon bonds, ether oxygen atoms, sulfur atoms, sulfonyl groups, sulfoxide groups, carbonyl groups, or alkylene groups of 1 to 5 carbon atoms, each phenylene group or each naphthylene group optionally being substituted in the ring or rings by one or two alkyl groups, each of from 1 to 4 carbon atoms, or by one or two chlorine or bromine atoms; and

$R^1$ independently are a straight chain or branched alkyl group of 1 to 16 carbon atoms, which may be substituted by one to four chlorine or bromine atoms; a straight chain or branched alkenyl group of 2 to 6 carbon atoms, which may be substituted by one to four chlorine or bromine atoms; a phenyl or naphthyl group, optionally substituted in the ring or rings by one or two chlorine or bromine atoms or by one or two alkyl groups, each of 1 to 4 carbon atoms, and having in all from 6 to 12 carbon atoms; a phenylalkyl or naphthylalkyl group, optionally substituted in the ring or rings by one or two chlorine or bromine atoms or by one or two alkyl groups, each of 1 to 4 carbon atoms, said phenylalkyl or naphthylalkyl group having in all from 7 to 12 carbon atoms; a cycloalkyl group of 3 to 6 carbon atoms; or a cycloalkylalkyl group of from 4 to 10 carbon atoms; (2) a polyglycidyl ether of a polyhydric phenol other than the diglycidyl ether of component (1); and (3) a dihydric phenol.

Processes for the preparation of the instant diglycidyl ethers of disecondary alkohols (1) and curable compositions thereof as blends with epoxy resins are disclosed in U.S. -A- No. 4,284,574.

Preferably, the groups $R^1$ in the compounds of formula I are the same and each represents an alkyl group of 1 to 14 carbon atoms, an allyl group, a cyclohexyl group, or a benzyl group. Further preferred compounds are those wherein R represents a radical consisting of two phenylene rings linked in the o-o′, o-p′, or p-p′ position by an alkylene group of 1 to 4 carbon atoms. Compounds where R represents a group of formula

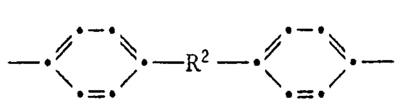

where $R^2$ represents a methylene or isopropylene group, and each $R^1$ represents an alkyl group of from 1 to 12 carbon atoms, more particularly of from 1 to 6 carbon atoms, are especially preferred.

Specific examples of such diglycidyl ethers are:
2,2-bis(p-(3-butoxy-2-glycidyloxypropyloxy)phenyl)propane;
2,2-bis(p-(3-methoxy-2-glycidyloxypropyloxy)phenyl)-propane;
2,2-bis(p-(3-ethoxy-2-glycidyloxypropyloxy)phenyl)propane;
2,2-bis(p-(3-dodecyloxy-2-glycidyloxypropyloxy)phenyl)propane;
2,2-bis(p-(3-tetradecyloxy-2-glycidyloxypropyloxy)phenyl)propane;
2,2-bis(p-(3-benzyloxy-2-glycidyloxypropyloxy)phenyl)propane;
bis(p-(3-butoxy-2-glycidyloxypropyloxy)phenyl)methane;
1,3-bis(3-phenoxy-2-glycidyloxypropyloxy)benzene;
bis(p-(3-butoxy-2-glycidyloxypropyloxy)phenyl)sulfone;
2,2-bis(p-(3-cyclohexyloxy-2-glycidyloxypropyloxy)phenyl)propane;
2,2-bis(4-(3-butoxy-2-glycidyloxypropyloxy)-3,5-dibromophenyl)propane;
2,2-bis(p-(3-allyloxy-2-glycidyloxypropyloxy)phenyl)propane;
2,2-bis(p-(3-benzyloxy-2-glycidyloxypropyloxy)phenyl)propane;
1,3-bis(2-glycidyloxy-3-phenoxypropyloxy)benzene and
2,2-bis(p-(3-phenoxy-2-glycidyloxypropyloxy)phenyl)propane.

Particularly preferred as component (1) is 2,2-bis(p-3-(butoxy-2-glycidyloxypropyloxy)phenyl)propane.

Suitable polyglycidyl ethers of polyhydric phenols (2) excluding the diglycidyl ethers noted above, include for example, the polyglycidyl polyethers of dihydric phenols including mononuclear phenols such as resorcinol, catechol, hydroquinone and methyl resorcinol and polynuclear phenols such as 4,4′-dihydroxybenzophenone, 1,5-dihydroxynaphthalene and particularly the alkylene bis-phenols such as 2,2-bis(4-hydroxyphenyl)propane (bisphenol A), 1,1-bis(4-hydroxyphenyl)propane, 1,1-bis(4-hydroxyphenyl)ethane, 1,1-bis(4-hydroxyphenyl)isobutane, 2,2-bis(4-hydroxyphenyl)butane, 2,2-bis(4-hydroxy-2-methylphenyl)-propane, 1,1-bis(4-hydroxyphenyl)-2-methylpropane, 3,3-bis(4-hydroxyphenyl)pentane, 1,1-bis(4-hydroxyphenyl)-2-ethylhexane, and bis (4-hydroxyphenyl)methane.

Particularly preferred as component (2) is the diglycidyl ether of bisphenol A.

The glycidyl ethers of the polyhydric phenols may be prepared according to well known methods. For example, the glycidyl ethers of the dihydric phenols may be prepared by reacting the dihydric phenol with epichlorohydrin at 50 °C to 150 °C using a molar excess of the epichlorohydrin in the presence of a base such as KOH, NaOH, $Ca(OH)_2$, the base being usually employed in slight stoichiometric excess of the epichlorohydrin. The usually complex mixture of products from such reaction may be generally represented by the formula:

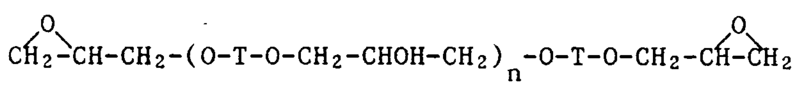

where T represents a divalent hydrocarbon radical of the dihydric phenol and where n is an integer of series 0, 1, 2, 3, etc. The average length of the chain enclosed in the parenthesis can be varied by changing the molar ratio of epichlorohydrin to dihydric phenol. Generally as the molar ratio of epichlorohydrin to dihydric phenol is decreased from 2:1 towards 1:1 the average value of n increases, increasing the softening temperature of the resulting product.

Preferably, the epoxy ethers employed in the compositions of the invention contain only carbon, oxygen, hydrogen and halogen atoms. However, other epoxy ethers may also be employed if desired as the glycidyl ethers of polyhydric thio ethers such as 2,2′-dihydroxydiethyl sulfide, or the glycidyl ethers of thioalcohols such as alpha-monothioglycerol.

Particularly preferred in the practice of the present invention are the polyglycidyl polyethers of alkylene bis-phenols such as the commonly employed 2,2-bis(4-hydroxyphenyl)propane, having molecular weights ranging from 350 to 900 and epoxide equivalent weights ranging from 190 to 450. Thus, the preferred diglycidyl ethers of component (2) correspond to the formula

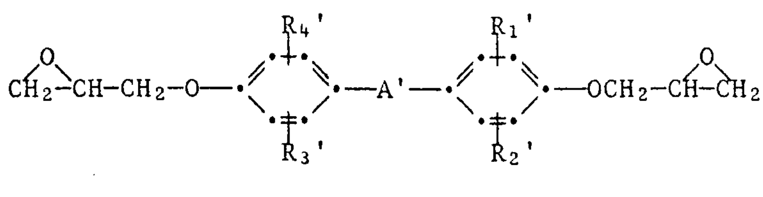

wherein $R_1'$, $R_2'$, $R_3'$ and $R_4'$ are independently hydrogen, chlorine or bromine, and A' is $C_1$-$C_4$ alkylene or alkylidene or

-S-, -S-S-,

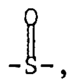, 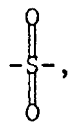, 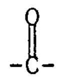

or -O-.

The applicable didhydric phenols correspond to the formula

HO-X-OH

wherein X is 1,2-phenylene, 1,3-phenylene, 1,4-phenylene or

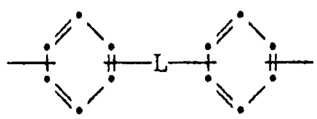

wherein L is a direct bond, alkylene of 1 to 6 carbon atoms, alkylidene of 2 to 6 carbon atoms, or

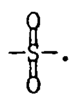.

These represent, for example, bisphenols F, A and S, catechol, resorcinol, o,o'-biphenol and p,p'-biphenol. The various phenols may be substituted on the respective phenyl rings by such non-reactive substituents as halogen, alkyl. Bisphenol A is preferred.

Most preferred resins according to the invention are obtained when component (1) is 2,2-bis(p-3-(butoxy-2-glycidyloxypropyloxy)phenyl)propane, component (2) is the diglycidyl ether of bisphenol A and component (3) is bisphenol A.

The glycidyl ethers will generally be present in weight ratios of diglycidyl ether of di-secondary alcohol (1) to polyglycidyl ether of polyhydric phenol (2) of 10:90 to 90:10 and preferably 50:50, and in total concentrations ranging from 65 to 92 %, by weight of the co-advanced adduct, and preferably 70 to 85 %. Correspondingly, the dihydric phenol is present in concentrations ranging from 35 to 8 %, by weight of the co-advanced adduct, and preferably 30 to 15 %. The respective concentrations are selected in order to insure the appropriate molecular weight for the co-advanced product.

The co-advancement reaction procedure generally involves the reaction of the respective diglycidyl ethers and the dihydric phenol in the presence of an advancing catalyst or accelerator. Typical catalysts include alkali metal hydroxides, imidazoles, phosphonium compounds. The specific choice of catalyst will depend on the intended end use application. In order to facilitate the initial blending operation, it may be desirable to warm the diglycidyl ether to 90 to 120 °C and then to add dihydric phenol. Stirring at this point provides a clear melt blend. The catalyst is then added and the temperature is raised to 130 to 200, preferably to 130 to 180 °C to effect the advancement reaction. The progress of the reaction can be monitored by titration of the epoxide groups using samples taken during the reaction. Completion of the reaction will generally take 2 to 15 hours to provide resin systems having epoxy values in the range of 0.01-0.2 epoxy equivalents per 100 grams of resin. The resulting advanced resins are viscous liquids or tack-free solids.

A further subject of the invention are heat curable compositions comprising the advanced epoxy resin according to the invention and a curing agent therefore.

Depending upon the desired end use application, the resin will be formulated with the appropriate ingredients and combined with the appropriate hardener and accelerator components. Preferred heat curable compositions are those, where the curing agent is a melamine-formaldehyde resin, a urea-formaldehyde resin or a phenol-formaldehyde resin. For the primary area of utility of the instant resin systems as coating compounds, melamine-formaldehyde curing agents are preferred. Other applicable curing agents include di- or polyfunctional isocyanates, urea-formaldehyde resins, phenol-formaldehyde resins and additional conventional curing agents.

An effective amount of the curing agent is employed. The proportion will depend on the chemical nature of the curing agent and the properties sought of the curable composition and its cured product; the optimum proportion readily being determined by methods familiar to those skilled in the art. By way of illustration, the hardener may be used in concentrations ranging from 5 to 20 %, by weight of the total co-advanced resin.

The resin-hardener systems can furthermore be mixed, prior to cure, with usual modifiers such as extenders, fillers and reinforcing agents, pigments, dyestuffs, plasticizers, diluents, accelerators. As extenders, reinforcing agents, fillers and pigments which can be employed in the curable systems according to the invention there may be mentioned, for example: coal tar, bitumen, glass fibers, boron fibers, carbonfibers, cellulose, polyethylene powder, polypropylene powder, mica, asbestos, various quartz powders, fused silicas, silicates, silanes, magnesium and calcium carbonates, gypsum, bentones, silica aerogel ("Aerosil"), lithopone, barite, titanium dioxide, carbon black, graphite, or iron powder. It is also possible to add other usual additives, for example flameproofing agents such as antimony trioxide, agents for conferring thixotropy, flow control agents such as silicones, cellulose acetate butyrate, polyvinyl butyral waxes, stearates (which are in part also used as mold release agents) to the curable systems. The accelerators that are added may be identical to the advancement catalysts or may additionally include boron trifluoride monoethylamine complexes, tertiary amines.

The end products can be manufactured in the usual manner with the aid of known mixing equipment (kneaders, extruders, rollers).

Curing will generally be conducted at temperatures ranging from 175 to 225 °C. The expression "cure", as used herein, denotes the conversion of the above systems into insoluble and infusible crosslinked products, with simultaneous shaping to give shaped articles such as moldings, pressings or laminates, or to give two-dimensional structures such as coatings, enamels or adhesive bonds.

A further subject of the invention is the cured composition resulting from the elevated temperature curing of the curable compositions of the invention.

The curable epoxide resin mixtures are especially useful in the fields of surface protection, the electrical industry, laminating processes and the building industry. They can be used in a formulation which is in each case suited to the particular end use, in the unfilled or filled state, optionally in the form of solutions or emulsions, as paints, enamels, sintering powders, compression molding compositions, dipping resins, casting resins, injection molding formulations, impregnating resins and adhesives, as tooling resins, laminating resins, sealing and filling compositions, floor covering compositions and binders for mineral aggregates.

Of primary interest is their utility as protective coatings. The coating composition may be applied to any suitable substrate by any suitable means such as spraying, dipping, brushing, painting or roller coating. After the desired film thickness is applied, curing proceeds at elevated temperatures. The resultant cured coatings are void-free and possess excellent physical properties and chemical resistance. The distinct advantage of these systems is exhibited in the former area where excellent mechanical properties are noted. Of particular value is the unexpected low viscosity compared to standard bisphenol A/epichlorohydrin resins. This low viscosity allows for the formulation of higher solids coatings thus reducing the level of solvent emissions and facilitating compliance with regulations of the Environmental Protection Agency. Correspondingly, coatings based on these resins also result in an unexpectedly high salt fog corrosion resistance and are characterized by having better adhesion and flexibility than standard bisphenol A resins.

The following examples will further illustrate the embodiments of the instant invention. In these examples, all parts are given by weight unless otherwise noted.

Example 1:

This example illustrates the preparation of typical co-advanced resins of this invention.

The diglycidyl ethers, bisphenol and catalyst are charged to a two liter, 4-neck break-away reaction kettle equipped with a mechanical stirrer, condenser, and thermometer/Thermowatch® temperature regulator. The system is flushed for thirty minutes with $N_2$ followed by gradual heating via a heating mantle to the desired reaction temperature. A schedule of 2 hours at 130 °C followed by heating at 165-180 °C until the resins are in the theoretical epoxy specification is employed.

Samples are removed from the reaction kettle periodically using a deflagration spoon, dissolved in 50 ml of 1:1 mixture of benzyl alcohol/isopropanol, and brought to a mild reflux. 5.0 ml of a freshly prepared solution of potassium iodide (3 g/5 ml $H_2O$) are added to this medium along with 10 drops of a 0.04 % solution of bromophenol blue. This resulting mixture is then titrated under reflux to a faint yellow end-point with 1.0 N hydrochloric acid. Heating is discontinued and the resulting molten epoxy resin is poured into a lined tray and allowed to solidify once the epoxy value is within specification.

The following co-advanced resins are prepared:

| | Resin(parts) | | | |
|---|---|---|---|---|
| | A | B | C | D |
| 2,2-bis(p-3(butoxy-2-glycidyl-oxypropyloxy)phenyl)-propane | 500 | 500 | 500 | 500 |
| diglycidyl ether of bisphenol A | 500 | 500 | 500 | 500 |
| bisphenol A | 304.7 | 388.9 | 418.0 | 433.9 |
| formylmethyltriphenylphosphoniumchloride(catalyst) | 0.1 | 0.1 | 0.1 | 0.1 |
| final epoxy value (eq./100 g) | 0.104 | 0.046 | 0.029 | 0.014 |
| final epoxide equivalent weight(g) | 962 | 2174 | 3448 | 7143 |
| Gardner-Holdt bubble viscosity (ASTM D 1545) at 25 °C [40 % non-volatiles in butyl carbitol®*] | M | W | Y | $Z_2$-$Z_3$ |
| Gardner color | 1 | 2 | 3 | 4 |
| resin type** | 4 | 7 | 9 | 488 |

*2-(2-butoxyethoxy)ethanol

**Informal notation directed to advanced resins reflecting an approximate measure of the number of repeating units in the resin chain.

## Example 2:

The adducts are formulated into curable coating systems as follows: Adduct (50 % weight solids in methyl ethyl ketone) blended with crosslinking resin and catalyst.

The formulated materials are drawn into 8 mil (0.2 mm) wet films on aluminum and tin plate panels, allowed a five minute induction period, air dried for 60 minutes at 25 °C and then cured at the indicated cure schedule.

### Crosslinking Resins:

1 - Cymel 303 - alkylated melamine - formaldehyde resin from American Cyanamid
2 - HZ 949U - phenol-formaldehyde condensate resin from CIBA-GEIGY Corporation
3 - Beckamine 21-511 - butylated urea-formaldehyde resin from Monsanto Chemical Co.

### Catalysts:

1 - p-toluene sulfonic acid
2 - FC-520 - trifluoromethane sulfonic acid salt from 3M Co.
3 - Nacure 155 - naphthalene sulfonic acid from King Industries
4 - Phosphoric acid

The various systems and test data are noted in the following tables:

| | Coating System | | | | | | | | | | | |
|---|---|---|---|---|---|---|---|---|---|---|---|---|
| | G | H | I | J | K | L | M | N | O | P | Q | R |
| Epoxy Resin | A | A | A | B | B | B | C | C | C | D | D | D |
| Crosslinking Resin | 1 | 2 | 3 | 1 | 2 | 3 | 1 | 2 | 3 | 1 | 2 | 3 |
| Epoxy: Crosslinker Weight Ratio | 9:1 | 3:1 | 3:1 | 9:1 | 3:1 | 3:1 | 9:1 | 3:1 | 3:1 | 9:1 | 3:1 | 3:1 |
| Catalyst | 1 | 2 | 4 | 3 | 3 | 4 | 1 | 2 | 4 | 3 | 3 | 4 |
| Catalyst Conc. (% by weight) | 3 | 3 | 1 | 1 | 1 | 1 | 3 | 3 | 1 | 1 | 1 | 1 |
| Cure Time (minutes) | 20 | 20 | 20 | 20 | 20 | 20 | 20 | 20 | 20 | 20 | 20 | 20 |
| Cure Temp. (°C) | 180 | 200 | 160 | 160 | 160 | 140 | 160 | 180 | 140 | 180 | 160 | 140 |

| | Coating System | | | | | |
|---|---|---|---|---|---|---|
| | Aluminum Plate | | | Tin Plate | | |
| | G | H | I | G | H | I |
| Appearance | clear | clear | clear | clear | clear | clear |
| Persoz (sec.)[a] | 385 | 389 | 392 | 365 | 316 | 345 |
| Direct Impact (cm.kg.)[b] | >184 | >184 | >184 | >184 | >184 | >184 |
| Reverse Impact (cm.kg.)[c] | >184 | >184 | >184 | >184 | >184 | >184 |
| Pencil Hardness[d] | 5H | 6H | 5H | 4H | 5H | 6H |
| Adhesion (%)[e] | 100 | 100 | 100 | 75 | 100 | 100 |
| Mandrel Bend (cm.)[f] | 0.3 | 0.3 | 0.3 | 0.3 | 0.3 | 0.3 |

a) ASTM D 4366

b) ASTM G 14

c) ASTM G 14

d) ASTM D 3363

e) ASTM D 3359

f) ASTM G 10

| | Coating System | | | | | |
|---|---|---|---|---|---|---|
| | Aluminum Plate | | | Tin Plate | | |
| | J | K | L | J | K | L |
| Appearance | clear | clear | clear | clear | clear | clear |
| Persoz (sec.) | 374 | 384 | 370 | 341 | 386 | 364 |
| Direct Impact (cm.kg.) | >184 | >184 | >184 | >184 | >184 | >184 |
| Reverse Impact (cm.kg.) | >184 | >184 | >184 | >184 | >184 | >184 |
| Pencil Hardness | 5H | 3H | 5H | 8H | 3H | 5H |
| Adhesion (%) | 100 | 100 | 100 | 100 | 100 | 100 |
| Mandrel Bend (cm.) | 0.3 | 0.3 | 0.3 | 0.3 | 0.3 | 0.3 |

| | Coating System | | | | | |
|---|---|---|---|---|---|---|
| | Aluminum Plate | | | Tin Plate | | |
| | M | N | O | M | N | O |
| Appearance | clear | clear | clear | clear | clear | clear |
| Persoz (sec.) | 374 | 387 | 375 | 310 | 296 | 327 |
| Direct Impact (cm.kg.) | 80 | >184 | >184 | >184 | >184 | >184 |
| Reverse Impact (cm.kg.) | 46 | >184 | >184 | >184 | >184 | >184 |
| Pencil Hardness | 4H | 7H | 5H | 5H | 5H | 6H |
| Adhesion (%) | 25 | 100 | 100 | 60 | 100 | 100 |
| Mandrel Bend (cm.) | <1.8 | 0.3 | 0.3 | 0.3 | 0.3 | 0.3 |

| | Coating System | | | | | |
|---|---|---|---|---|---|---|
| | Aluminum Plate | | | Tin Plate | | |
| | P | Q | R | P | Q | R |
| Appearance | clear | clear | clear | clear | clear | clear |
| Persoz (sec.) | 409 | 432 | 415 | 282 | 328 | 342 |
| Direct Impact (cm.kg.) | >184 | >184 | >184 | >184 | >184 | >184 |
| Reverse Impact (cm.kg.) | >184 | >184 | >184 | >184 | >184 | >184 |
| Pencil Hardness | 6H | 8H | 6H | 5H | 4H | 5H |
| Adhesion (%) | 100 | 100 | 100 | 100 | 100 | 100 |
| Mandrel Bend (cm.) | 0.3 | 0.3 | 0.3 | 0.3 | 0.3 | 0.3 |

Example 3:

The flexibility of film coatings based on Resins C and D (Example 1) is determined by formulating the resins with the indicated crosslinking resin and catalyst at a % non-volatile content adjusted to achieve an

18-22 second viscosity rating in a No. 4 Zahn cup, applying the coating over aluminum with a No. 14 dry film, curing the coated aluminum for 20 minutes at a cure temperature of 140-180 °C, cutting the panels into 5 cm x 10 cm sections and subjecting the reaction to the "T Bend Test" (ASTM 601 D4145 - 1985). Flexibility is expressed as 0T to 7T with 0T being the highest degree of flexibility combined with the absence of visible cracking when viewed under a microscope.

Additional Crosslinking Resins

4-Cymel 300
5-Cymel 370 } (see crosslinking resin 1 above)
6-Cymel 255-10

7-Resimene 741
8-Resimene 747 } melamine-formaldehyde resins from Monsanto Chemical Co.
9-Resimene 797

Additional Catalyst

5-Cycat 4040 p-toluenesulfonic acid from American Cyanamid Co.

| Crosslinker | Catalyst | Epoxy Crosslinker Wt. Ratio | Cat. Conc. % by wt.) | Flexibility | |
|---|---|---|---|---|---|
| | | | | C | D |
| 4 | 5 | 90:10 | 3 | 3T | - |
| 4 | 3 | 90:10 | 1 | - | 0T |
| 1 | 5 | 90:10 | 3 | 1T-2T | - |
| 1 | 3 | 90:10 | 1 | - | >5T |
| 5 | 5 | 90:10 | 3 | 0T | - |
| 5 | 3 | 90:10 | 1 | - | >5T |
| 6 | 5 | 90:10 | 3 | 1T | - |
| 6 | 3 | 90:10 | 1 | - | 2T |
| 3 | 4 | 75:25 | 1 | 0T | 0T |
| 7 | 5 | 90:10 | 3 | 5T | - |
| 7 | 3 | 90:10 | 1 | - | 0T |
| 8 | 5 | 90:10 | 3 | 0T | - |
| 8 | 3 | 90:10 | 1 | - | 0T |
| 9 | 5 | 90:10 | 3 | 1T | - |
| 9 | 3 | 90:10 | 1 | - | 0T |
| 2 | 2 | 85:15 | 3 | 0T | - |
| 2 | 3 | 85:15 | 1 | - | 0T |

These data thus indicate the generally excellent mechanical properties, particularly adhesion and flexibility, for the adducts of this invention.

Summarizing, it is seen that this invention provides co-advanced epoxy systems which afford cured compositions exhibiting improved performance characteristics.

**Claims**

**Claims for the following Contracting States : BE, DE, GB, FR, IT, NL, SE, CH/LI**

1. An advanced epoxy resin resulting from the reaction of (1) a diglycidyl ether of a di-secondary alcohol corresponding to the formula I

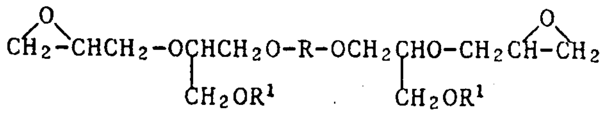 (I),

wherein R is phenylene, naphthylene or a radical consisting of two or three phenylene groups linked by one or two carbon-carbon bonds, ether oxygen atoms, sulfur atoms, sulfonyl groups, sulfoxide groups, carbonyl groups, or alkylene groups of 1 to 5 carbon atoms, or each phenylene group or each naphthylene group being substituted in the ring or rings by one or two alkyl groups, each of from 1 to 4 carbon atoms, or by one or two chlorine or bromine atoms; and

$R^1$ independently are a straight chain or branched alkyl group of 1 to 16 carbon atoms, or a straight chain or branched alkyl group of 1 to 16 carbon atoms substituted by one to four chlorine or bromine atoms; a straight chain or branched alkenyl group of 2 to 6 carbon atoms, or a straight chain or branched alkenyl group of 2 to 6 carbon atoms substituted by one to four chlorine or bromine atoms; a phenyl or naphthyl group, or a phenyl or naphthyl group substituted in the ring or rings by one or two chlorine or bromine atoms or by one or two alkyl groups, each of 1 to 4 carbon atoms, and having in all from 6 to 12 carbon atoms; a phenylalkyl or naphthylalkyl group or a phenylalkyl or naphthylalkyl group substituted in the ring or rings by one or two chlorine or bromine atoms or by one or two alkyl groups, each of 1 to 4 carbon atoms, said phenylalkyl or naphthylalkyl group having in all from 7 to 12 carbon atoms; a cycloalkyl group of 3 to 6 carbon atoms; or a cycloalkylalkyl group of from 4 to 10 carbon atoms; (2) a polyglycidyl ether of a polyhydric phenol other than the diglycidyl ether of component (1); and (3) a dihydric phenol.

**2.** The resin of claim 1, wherein component 2 is a diglycidyl ether of the formula

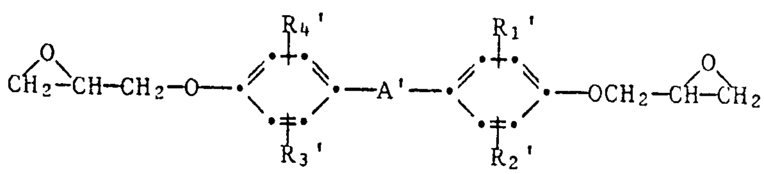

wherein $R_1'$, $R_2'$, $R_3'$ and $R_4'$ are independently hydrogen, chlorine or bromine, and A′ is $C_1$-$C_4$alkylene or alkylidene or

-S-, -S-S-,

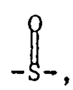, 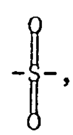, 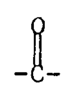

or -O-.

**3.** The resin of claim 1, wherein $R^1$ are the same and each represents an alkyl group of 1 to 14 carbon atoms, allyl, cyclohexyl or benzyl.

**4.** The resin of claim 1, wherein R represents a group of formula

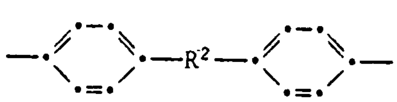

where $R^2$ represents a methylene or isopropylene group, and each $R^1$ represents an alkyl group of from 1 to 12 carbon atoms.

5. The resin of claim 4, wherein component (1) is 2,2-bis(p-3-(butoxy-2-glycidyloxypropyloxy)phenyl)-propane.

6. The resin of claim 2, wherein component (2) is the diglycidyl ether of bisphenol A.

7. The resin of claim 1, wherein said dihydric phenol corresponds to the formula

HO-X-OH

wherein X is 1,2-phenylene, 1,3-phenylene, 1,4-phenylene or

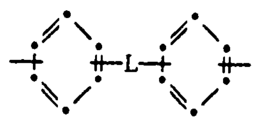

wherein L is a direct bond, alkylene of 1 to 6 carbon atoms, alkylidene of 2 to 6 carbon atoms, or

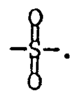

8. The resin of claim 7, wherein said dihydric phenol is bisphenol A.

9. The resin of claim 1, wherein components (1) and (2) are present in a concentration ranging from 65 to 92 % by weight, and component (3) is present in a concentration of 35 to 8 %, by weight.

10. The resin of claim 1, wherein components (1) and (2) are present in a weight ratio of 10:90 to 90:10.

11. The resin of claim 1, wherein component (1) is 2,2-bis(p-3-(butoxy-2-glycidyloxypropyloxy)phenyl)-propane, component (2) is the diglycidyl ether of bisphenol A and component (3) is bisphenol A.

12. A heat curable composition which comprises the advanced epoxy resin of claim 1 and a curing agent therefore.

13. The heat curable composition of claim 12, wherein said curing agent is a melamine-formaldehyde resin, a urea-formaldehyde resin or a phenolformaldehyde resin.

14. The cured composition resulting from the elevated temperature curing of the composition of claim 12.

**Claims for the following Contracting State: ES**

1. Process for the preparation of an advanced epoxy resin by heating (1) a diglycidyl ether of a di-secondary alcohol corresponding to the formula I

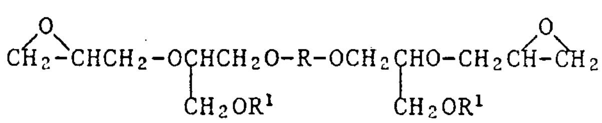 (I),

wherein R is phenylene, naphthylene or a radical consisting of two or three phenylene groups linked by one or two carbon-carbon bonds, ether oxygen atoms, sulfur atoms, sulfonyl groups, sulfoxide groups, carbonyl groups, or alkylene groups of 1 to 5 carbon atoms, or each phenylene group or each naphthylene group being substituted in the ring or rings by one or two alkyl groups, each of from 1 to 4

carbon atoms, or by one or two chlorine or bromine atoms; and
$R^1$ independently are a straight chain or branched alkyl group of 1 to 16 carbon atoms, or a straight chain or branched alkyl group of 1 to 16 carbon atoms substituted by one to four chlorine or bromine atoms; a straight chain or branched alkenyl group of 2 to 6 carbon atoms, or a straight chain or branched alkenyl group of 2 to 6 carbon atoms substituted by one to four chlorine or bromine atoms; a phenyl or naphthyl group, or a phenyl or naphthyl group substituted in the ring or rings by one or two chlorine or bromine atoms or by one or two alkyl groups, each of 1 to 4 carbon atoms, and having in all from 6 to 12 carbon atoms; a phenylalkyl or naphthylalkyl group or a phenylalkyl or naphthylalkyl group substituted in the ring or rings by one or two chlorine or bromine atoms or by one or two alkyl groups, each of 1 to 4 carbon atoms, said phenylalkyl or naphthylalkyl group having in all from 7 to 12 carbon atoms; a cycloalkyl group of 3 to 6 carbon atoms; or a cycloalkylalkyl group of from 4 to 10 carbon atoms; (2) a polyglycidyl ether of a polyhydric phenol other than the diglycidyl ether of component (1); and (3) a dihydric phenol.

**2.** The process of claim 1, wherein component 2 is a diglycidyl ether of the formula

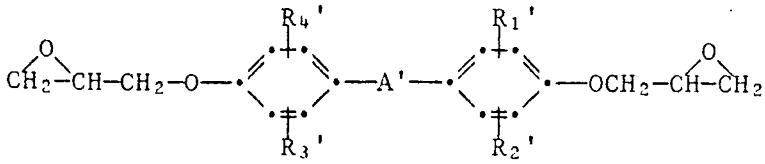

wherein $R_1'$, $R_2'$, $R_3'$ and $R_4'$ are independently hydrogen, chlorine or bromine, and A′ is $C_1$-$C_4$ alkylene or alkylidene or
-S-, -S-S-,

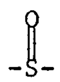, 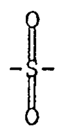, 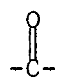

or -O-.

**3.** The process of claim 1, wherein $R^1$ ar the same and each represents an alkyl group of 1 to 14 carbon atoms, allyl, cyclohexyl or benzyl.

**4.** The process of claim 1, wherein R represents a group of formula

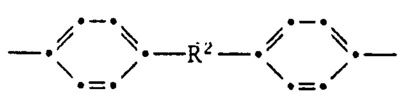

where $R^2$ represents a methylene or isopropylene group, and each $R^1$ represents an alkyl group of from 1 to 12 carbon atoms.

**5.** The process of claim 4, wherein component (1) is 2,2-bis(p-3-(butoxy-2-glycidyloxypropyloxy)phenyl)-propane.

**6.** The process of claim 2, wherein component (2) is the diglycidyl ether of bisphenol A.

**7.** The process of claim 1, wherein said dihydric phenol corresponds to the formula

HO-X-OH

wherein X is 1,2-phenylene, 1,3-phenylene, 1,4-phenylene or

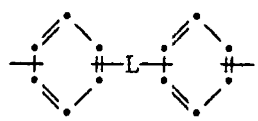

wherein L is a direct bond, alkylene of 1 to 6 carbon atoms, alkylidene of 2 to 6 carbon atoms, or

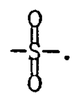

8. The process of claim 7, wherein said dihydric phenol is bisphenol A.

9. The process of claim 1, wherein components (1) and (2) are present in a concentration ranging from 65 to 92 % by weight, and component (3) is present in a concentration of 35 to 8 %, by weight.

10. The process of claim 1, wherein components (1) and (2) are present in a weight ratio of 10:90 to 90:10.

11. The process of claim 1, wherein component (1) is 2,2-bis(p-3-(butoxy-2-glycidyloxypropyloxy)phenyl)-propane, component (2) is the diglycidyl ether of bisphenol A and component (3) is bisphenol A.

12. A heat curable composition which comprises the advanced epoxy resin of claim 1 and a curing agent therefore.

13. The heat curable composition of claim 12, wherein said curing agent is a melamine-formaldehyde resin, a urea-formaldehyde resin or a phenolformaldehyde resin.

14. The process for the preparation of crosslinked products by heating the curable composition of claim 12.

**Patentansprüche**
**Patentansprüche für folgende Vertragsstaaten : BE, DE, GB, FR, IT, NL, SE, CH/LI**

1. Kettenverlängertes Epoxidharz, erhalten aus der Reaktion (1) eines Diglycidylethers eines di-sekundären Alkohols der Formel I

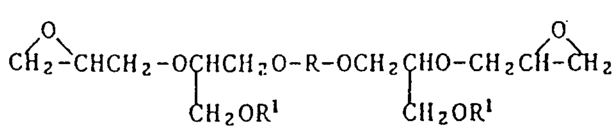 (I),

worin R Phenylen, Naphthylen oder ein Rest ist, der aus zwei oder drei Phenylengruppen besteht, verbunden durch eine oder zwei Kohlenstoff-Kohlenstoffbindungen, Ethersauerstoffatome, Schwefelatome, Sulfonylgruppen, Sulfoxidgruppen, Carbonylgruppen oder Alkylengruppen mit 1 bis 5 Kohlenstoffatomen, oder jede Phenylengruppe oder jede Naphthylengruppe ist in dem Ring oder in den Ringen substituiert durch eine oder zwei Alkylgruppen, die jeweils 1 bis 4 Kohlenstoffatome haben, oder durch ein oder zwei Chlor- oder Bromatome; und
$R^1$ ist unabhängig eine geradkettige oder verzweigte Alkylgruppe mit 1 bis 16 Kohlenstoffatomen oder eine geradkettige oder verzweigte Alkylgruppe mit 1 bis 16 Kohlenstoffatomen, die substituiert ist durch ein bis vier Chlor- oder Bromatome; eine geradkettige oder verzweigte Alkenylgruppe mit 2 bis 6 Kohlenstoffatomen oder eine geradkettige oder verzweigte Alkenylgruppe mit 2 bis 6 Kohlenstoffatomen, die substituiert ist durch ein bis vier Chlor- oder Bromatome; eine Phenyl- oder Naphthylgruppe oder eine Phenyl- oder Naphthylgruppe, die in dem Ring oder in den Ringen substituiert ist durch ein oder zwei Chlor- oder Bromatome oder durch eine oder zwei Alkylgruppen, die jeweils 1 bis 4 Kohlenstoffatome haben, und die insgesamt 6 bis 12 Kohlenstoffatome haben; eine Phenylalkyl- oder

Naphthylalkyl-Gruppe, oder eine Phenylalkyl- oder Naphthylalkylgruppe, die im Ring oder in den Ringen durch 1 oder 2 Chlor- oder Bromatome oder durch eine oder zwei Alkylgruppen, die jeweils 1 bis 4 Kohlenstoffatome haben, substituiert ist, wobei die Phenylalkyl- oder Naphthylalkylgruppe insgesamt 7 bis 12 Kohlenstoffatome hat; eine Cycloalkylgruppe mit 3 bis 6 Kohlenstoffatomen; oder eine Cycloalkylalkyl-Gruppe mit 4 bis 10 Kohlenstoffatomen; (2) eines Polyglycidylethers eines mehrwertigen Phenols, der nicht der Diglycidylether der Komponente (1) ist; und (3) eines zweiwertigen Phenols.

**2.** Harz nach Anspruch 1, worin die Komponente (2) ein Diglycidylether der Formel

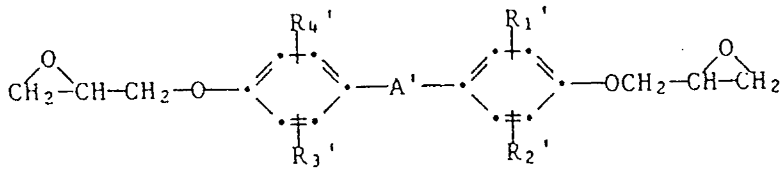

ist, worin $R_1$', $R_2$', $R_3$' und $R_4$' unabhängig voneinander Wasserstoff, Chlor oder Brom sind, und A' ist $C_1$-$C_4$-Alkylen oder - Alkyliden oder
-S-, -S-S-,

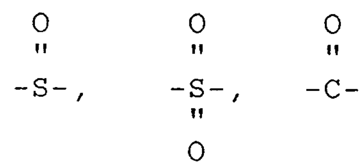

oder -O-

**3.** Harz nach Anspruch 1, worin $R^1$ gleich ist und jeweils eine Alkylgruppe mit 1 bis 14 Kohlenstoffatomen, Allyl, Cyclohexyl oder Benzyl darstellt.

**4.** Harz nach Anspruch 1, worin R eine Gruppe der Formel

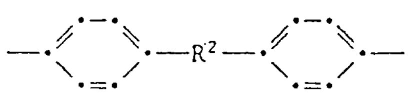

darstellt, worin $R^2$ eine Methylen- oder Isopropylengruppe ist, und jeweils $R^1$ eine Alkylgruppe mit 1 bis 12 Kohlenstoffatomen ist.

**5.** Harz nach Anspruch 4, worin die Komponente (1) 2,2-Bis(p-3-(butoxy-2-glycidyloyypropyloxy)phenyl)-propan ist.

**6.** Harz nach Anspruch 2, worin die Komponente (2) der Diglycidylether von Bisphenol A ist.

**7.** Harz nach Anspruch 1, worin das zweiwertige Phenol der Formel

HO-X-OH

entspricht, worin X die Bedeutung 1,2-Phenylen, 1,3-Phenylen, 1,4-Phenylen oder

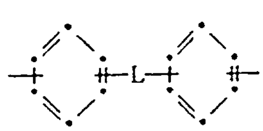

hat, worin L eine Direktbindung, Alkylen mit 1 bis 6 Kohlenstoffatomen, Alkyliden mit 2 bis 6 Kohlenstoffatomen oder

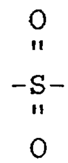

ist.

8. Harz nach Anspruch 7, worin das zweiwertige Phenol Bisphenol A ist.

9. Harz nach Anspruch 1, worin die Komponenten (1) und (2) in einer Konzentration im Bereich von 65 bis 92 Gewichts-% vorhanden sind, und die Komponente (3) in einer Konzentration von 35 bis 8 Gewichts-% vorhanden ist.

10. Harz nach Anspruch 1, worin die Komponenten (1) und (2) in einem Gewichtsverhältnis von 10:90 bis 90:10 vorhanden sind.

11. Harz nach Anspruch 1, worin die Komponente (1) 2,2-Bis(p-3-(butoxy-2-glycidyloxypropyloxy)phenyl)-propan, die Komponente (2) der Diglycidylether von Bisphenol A und die Komponente (3) Bisphenol A ist.

12. Wärmehärtbare Zusammensetzung, die die kettenverlängerten Epoxidharze nach Anspruch 1 und ein Härtungsmittel dafür umfaßt.

13. Wärmehärtbare Zusammensetzung nach Anspruch 12, worin das Härtungsmittel ein Melamin-Formaldehydharz, ein Harnstoff-Formaldehydharz oder ein Phenol-Formaldehydharz ist.

14. Gehärtete Zusammensetzung, erhalten aus der Härtung der Zusammensetzung von Anspruch 12 bei erhöhter Temperatur.

**Patentansprüche für folgenden Vertragsstaat : ES**

1. Verfahren zur Herstellung eines kettenverlängerten Epoxidharzes durch Erhitzen von (1) einem Diglycidylether eines disekundären Alkohols der Formel I

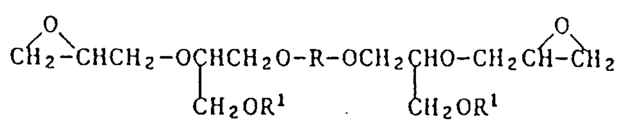

(I),

worin R Phenylen, Naphthylen oder ein Rest ist, der aus zwei oder drei Phenylengruppen besteht, verbunden durch eine oder zwei Kohlenstoff-Kohlenstoffbindungen, Ethersauerstoffatome, Schwefelatome, Sulfonylgruppen, Sulfoxidgruppen, Carbonylgruppen oder Alkylengruppen mit 1 bis 5 Kohlenstoffatomen, oder jede Phenylengruppe oder jede Naphthylengruppe ist in dem Ring oder in den Ringen substituiert durch eine oder zwei Alkylgruppen, die jeweils 1 bis 4 Kohlenstoffatome haben, oder durch ein oder zwei Chlor- oder Bromatome; und

$R^1$ ist unabhängig eine geradkettige oder verzweigte Alkylgruppe mit 1 bis 16 Kohlenstoffatomen oder eine geradkettige oder verzweigte Alkylgruppe mit 1 bis 16 Kohlenstoffatomen, die substituiert ist durch ein bis vier Chlor- oder Bromatome; eine geradkettige oder verzweigte Alkenylgruppe mit 2 bis 6 Kohlenstoffatomen oder eine geradkettige oder verzweigte Alkenylgruppe mit 2 bis 6 Kohlenstoffatomen, die substituiert ist durch ein bis vier Chlor- oder Bromatome; eine Phenyl- oder Naphthylgruppe oder eine Phenyl- oder Naphthylgruppe, die in dem Ring oder in den Ringen substituiert ist durch ein oder zwei Chlor- oder Bromatome oder durch eine oder zwei Alkylgruppen, die jeweils 1 bis 4

Kohlenstoffatome haben, und die insgesamt 6 bis 12 Kohlenstoffatome haben; eine Phenylalkyl- oder Naphthylalkyl-Gruppe, oder eine Phenylalkyl- oder Naphthylalkylgruppe, die im Ring oder in den Ringen durch 1 oder 2 Chlor- oder Bromatome oder durch eine oder zwei Alkylgruppen, die jeweils 1 bis 4 Kohlenstoffatome haben, substituiert ist, wobei die Phenylalkyl- oder Naphthylalkylgruppe insgesamt 7 bis 12 Kohlenstoffatome hat; eine Cycloalkylgruppe mit 3 bis 6 Kohlenstoffatomen; oder eine Cycloalkylalkyl-Gruppe mit 4 bis 10 Kohlenstoffatomen; (2) einem Polyglycidylether eines mehrwertigen Phenols, der nicht der Diglycidylether der Komponente (1) ist; und (3) einem zweiwertigen Phenol.

2. Verfahren nach Anspruch 1, worin die Komponente (2) ein Diglycidylether der Formel

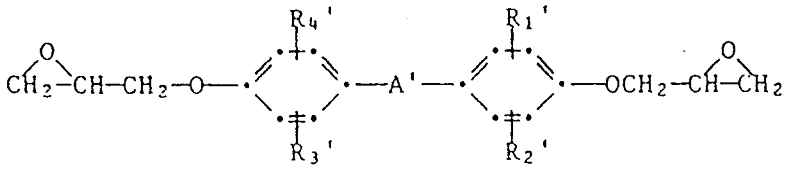

ist, worin $R_1'$, $R_2'$, $R_3'$ und $R_4'$ unabhängig voneinander Wasserstoff, Chlor oder Brom sind, und A' ist $C_1$-$C_4$-Alkylen oder -Alkyliden oder

-S-, -S-S-,

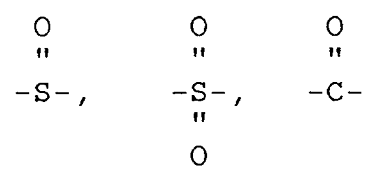

oder -O-

3. Verfahren nach Anspruch 1, worin $R^1$ gleich ist und jeweils eine Alkylgruppe mit 1 bis 14 Kohlenstoffatomen, Allyl, Cyclohexyl oder Benzyl darstellt.

4. Verfahren nach Anspruch 1, worin R eine Gruppe der Formel

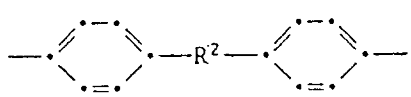

darstellt, worin $R^2$ eine Methylen- oder Isopropylengruppe ist, und jeweils $R^1$ eine Alkylgruppe mit 1 bis 12 Kohlenstoffatomen ist.

5. Verfahren nach Anspruch 4, worin die Komponente (1) 2,2-Bis(p-3-(butoxy-2-glycidyloxypropyloxy)-phenyl)propan ist.

6. Verfahren nach Anspruch 2, worin die Komponente (2) der Diglycidylether von Bisphenol A ist.

7. Verfahren nach Anspruch 1, worin das zweiwertige Phenol der Formel

HO-X-OH

entspricht, worin X die Bedeutung 1,2-Phenylen, 1,3-Phenylen, 1,4-Phenylen oder

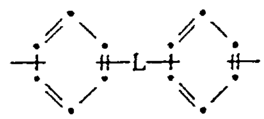

hat, worin L eine Direktbindung, Alkylen mit 1 bis 6 Kohlenstoffatomen, Alkyliden mit 2 bis 6 Kohlenstoffatomen oder

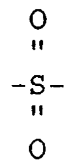

ist.

**8.** Verfahren nach Anspruch 7, worin das zweiwertige Phenol Bisphenol A ist.

**9.** Verfahren nach Anspruch 1, worin die Komponenten (1) und (2) in einer Konzentration im Bereich von 65 bis 92 Gewichts-% vorhanden sind, und die Komponente (3) in einer Konzentration von 35 bis 8 Gewichts-% vorhanden ist.

**10.** Verfahren nach Anspruch 1, worin die Komponenten (1) und (2) in einem Gewichtsverhältnis von 10:90 bis 90:10 vorhanden sind.

**11.** Verfahren nach Anspruch 1, worin die Komponente (1) 2,2-Bis(p-3-(butoxy-2-glycidyloxypropyloxy)-phenyl)propan, die Komponente (2) der Diglycidylether von Bisphenol A und die Komponente (3) Bisphenol A ist.

**12.** Wärmehärtbare Zusammensetzung, die die kettenverlängerten Epoxidharze nach Anspruch 1 und ein Härtungsmittel dafür umfaßt.

**13.** Wärmehärtbare Zusammensetzung nach Anspruch 12, worin das Härtungsmittel ein Melamin-Formaldehydharz, ein Harnstoff-Formaldehydharz oder ein Phenol-Formaldehydharz ist.

**14.** Verfahren zur Herstellung von vernetzten Produkten durch Erhitzen der härtbaren Zusammensetzung von Anspruch 12.

**Revendications**

**Revendications pour les Etats contractants suivants : BE, DE, GB, FR, IT, NL, SE, CH, LI**

**1.** Résine époxy à chaînes allongées résultant de la réaction de (1) un éther diglycidylique d'un alcool disecondaire, correspondant à la Formule I :

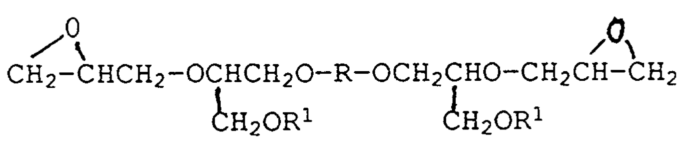

(I)

dans laquelle R représente un phénylène, naphtylène ou un radical consistant de 2 ou 3 groupements phénylènes liés par 1 ou 2 liaisons carbone-carbone, des atomes d'oxygène éther, des atomes de soufre, des groupements sulfonyle, des groupements sulfoxyde, des groupements carbonyle ou des groupements alkylènes de 1 à 5 atomes de carbone, chaque groupement phénylène ou chaque groupement naphtylène étant éventuellement substitué sur le site ou les sites par 1 ou 2 groupements

alkyle, chacun comportant de 1 à 4 atomes de carbone, ou par 1 ou 2 atomes de chlore ou de brome; et

les $R^1$ sont indépendamment un groupement alkyle ramifié ou à chaîne linéaire de 1 à 16 atomes de carbone, qui peuvent être substitués par 1 ou 4 atomes de chlore ou de brome; un groupement alkényle ramifié ou à chaîne linéaire de 2 à 6 atomes de carbone, qui peut être substitué par 1 à 4 atomes de chlore ou de brome; un groupement naphtyle ou phényle, éventuellement substitué sur le site ou les sites par 1 ou 2 de chlore ou de brome ou par 1 ou 2 groupements alkyle, chacun comportant de 1 à 4 atomes de carbone, et ayant en tout de 6 à 12 atomes de carbone, un groupement phénylalkyle ou naphtylalkyle, éventuellement substitué sur le site ou les sites par 1 ou 2 atomes de chlore ou de brome ou par 1 ou 2 groupements alkyle, chacun comportant de 1 à 4 atomes de carbone, ledit groupement phénylalkyle ou naphtylalkyle ayant en tout de 7 à 12 atomes de carbone; un groupement cycloalkyle de 3 à 6 atomes de carbone; ou un groupement cycloalkylalkyle de 4 à 10 atomes de carbone; (2) un éther polyglycidylique d'un polyphénol autre que l'éther diglycidylique du composant (1); et (3) un diphénol.

2. Résine de la revendication 1, dans laquelle le composant 2 est un éther diglycidylique ayant pour formule

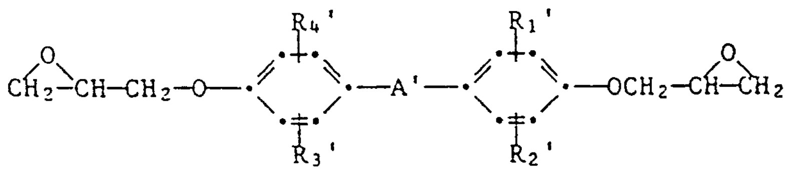

dans laquelle $R_1'$, $R_2'$, $R_3'$ et $R_4'$ représentent indépendamment un atome d'hydrogène, de chlore ou de brome, et A' est un groupe alkylène ou alkylidène en $C_1$-$C_4$ ou

-S-, -S-S-,

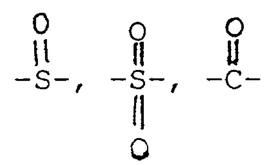

ou -O-

3. Résine de la revendication 1, dans laquelle les $R^1$ sont les mêmes et chacun représente un groupement alkyle de 1 à 14 atomes de carbone, allyle, cyclohexyle ou benzyle.

4. Résine de la revendication 1, dans laquelle R représente un groupement ayant pour formule

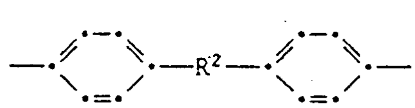

où $R^2$ représente un groupement méthylène ou isopropylène, et chaque $R^1$ représente un groupement alkyle ayant de 1 à 12 atomes de carbone.

5. Résine de la revendication 4, dans laquelle le composant (1) est le 2,2-bis(p-3-(butoxy-2-glycidyloxypropyloxy)phenyl)propane.

6. Résine de la revendication 2, dans laquelle le composant (2) est l'éther diglycidylique éther de bisphenol A.

**7.** Résine de la revendication 1, dans laquelle ledit diphenol correspond à la formule

HO-X-OH

dans laquelle X est le 1,2-phénylène, le 1,3-phénylène, le 1,4-phénylène ou

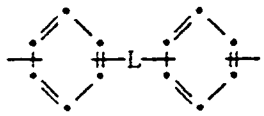

dans laquelle L est une liaison directe
un alkylène de 1 à 6 atomes de carbone, un alkylidène de 2 à 6 atomes de carbone ou

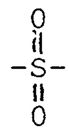

**8.** Résine de la revendication 7, dans laquelle ledit diphénol est un bisphénol A.

**9.** Résine de la revendication 1, dans laquelle les composants (1) et (2) sont présents avec une concentration comprise entre 65 et 92% en poids, et le composant (3) est présent avec une concentration comprise entre 35 et 8%, en poids.

**10.** Résine de la revendication 1, dans laquelle les composants (1) et (2) sont présents dans un rapport pondéral de 10:90 à 90:10.

**11.** Résine de la revendication 1 dans laquelle le composant (1) est le 2,2-bis(p-3-(butoxy-2-glycidyloxypropyloxy)phenyl)propane, le composant (2) est l'éther diglycidylique de bisphenol A et le composant (3) est le bisphenol A.

**12.** Composition durcissable à la chaleur qui comprend la résine époxy à chaînes allongées de la revendication 1 et un agent durcissant.

**13.** Composition durcissable à la chaleur de la revendication 12, dans laquelle ledit agent durcissant est une résine mélamine-formaldehyde, une résine urée-formaldéhyde ou une résine phénol-formaldéhyde.

**14.** Composition durcissable résultant du durcissage à température élevée de la composition de la revendication 12.

**Revendications pour l'Etat contractant suivant : ES**

**1.** Procédé pour la préparation d'une résine époxy à chaînes allongées par chauffage (1) d'un éther diglycidylique d'un alcool di-secondaire, correspondant à la Formule I :

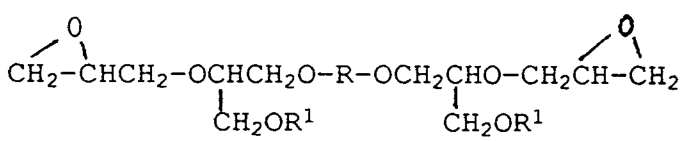

(I)

dans laquelle R représente un phénylène, naphtylène ou un radical consistant de 2 ou 3 groupements phénylènes liés par 1 ou 2 liaisons carbone-carbone, des atomes d'oxygène éther, des atomes de soufre, des groupements sulfonyle, des groupements sulfoxyde, des groupements carbonyle

ou des groupements alkylènes de 1 à 5 atomes de carbone, chaque groupement phénylène ou chaque groupement naphtylène étant éventuellement substitué sur le site ou les sites par 1 ou 2 groupements alkyle, chacun comportant de 1 à 4 atomes de carbone, ou par 1 ou 2 atomes de chlore ou de brome; et

les $R^1$ sont indépendamment un groupement alkyle ramifié ou à chaîne linéaire de 1 à 16 atomes de carbone, qui peuvent être substitués par 1 ou 4 atomes de chlore ou de brome; un groupement alkényle ramifié ou à chaîne linéaire de 2 à 6 atomes de carbone, qui peut être substitué par 1 à 4 atomes de chlore ou de brome; un groupement naphtyle ou phényle, éventuellement substitué sur le site ou les sites par 1 ou 2 de chlore ou de brome ou par 1 ou 2 groupements alkyle, chacun comportant de 1 à 4 atomes de carbone, et ayant en tout de 6 à 12 atomes de carbone, un groupement phénylalkyle ou naphtylalkyle, éventuellement substitué sur le site ou les sites par 1 ou 2 atomes de chlore ou de brome ou par 1 ou 2 groupements alkyle, chacun comportant de 1 à 4 atomes de carbone, ledit groupement phénylalkyle ou naphtylalkyle ayant en tout de 7 à 12 atomes de carbone; un groupement cycloalkyle de 3 à 6 atomes de carbone; ou un groupement cycloalkylalkyle de 4 à 10 atomes de carbone; (2) un éther polyglycidylique d'un polyphénol autre que l'éther diglycidylique du composant (1); et (3) un diphénol.

**2.** Procédé de la revendication 1, dans lequel le composant 2 est un éther diglycidylique ayant pour formule

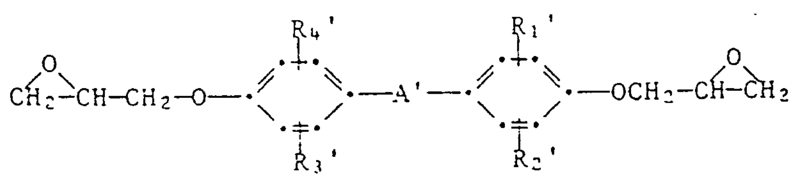

dans laquelle $R_1'$, $R_2'$, $R_3'$ et $R_4'$ représentent indépendamment un atome d'hydrogène, de chlore ou de brome, et A' est un groupe alkylène ou alkylidène en $C_1$-$C_4$ ou

-S-, -S-S-,

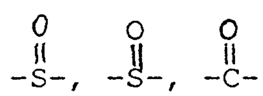

ou -O-

**3.** Procédé de la revendication 1, dans lequel les $R^1$ sont les mêmes et chacun représente un groupement alkyle de 1 à 14 atomes de carbone, allyle, cyclohexyle ou benzyle.

**4.** Procédé de la revendication 1, dans lequel R représente un groupement ayant pour formule

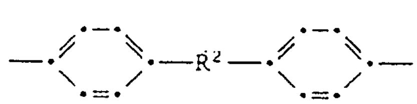

où $R^2$ représente un groupement méthylène ou isopropylène, et chaque $R^1$ représente un groupement alkyle ayant de 1 à 12 atomes de carbone.

**5.** Procédé de la revendication 4, dans lequel le composant (1) est le 2,2-bis(p-3-(butoxy-2-glycidyloxypropyloxy)phenyl)propane.

**6.** Procédé de la revendication 2, dans lequel le composant (2) est l'éther diglycidylique éther de bisphenol A.

**7.** Procédé de la revendication 1, dans lequel ledit diphenol correspond à la formule

HO-X-OH

dans laquelle X est le 1,2-phénylène, le 1,3-phénylène, le 1,4-phénylène ou

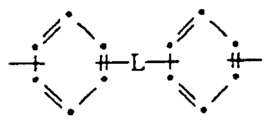

dans laquelle L est une liaison directe
un alkylène de 1 à 6 atomes de carbone, un alkylidène de 2 à 6 atomes de carbone ou

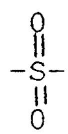

**8.** Procédé de la revendication 7, dans lequel ledit diphénol est un bisphénol A.

**9.** Procédé de la revendication 1, dans lequel les composants (1) et (2) sont présents avec une concentration comprise entre 65 et 92% en poids, et le composant (3) est présent avec une concentration comprise entre 35 et 8%, en poids.

**10.** Procédé de la revendication 1, dans lequel les composants (1) et (2) sont présents dans un rapport pondéral de 10:90 à 90:10.

**11.** Procédé de la revendication 1 dans lequel le composant (1) est le 2,2-bis(p-3-(butoxy-2-glycidyloxypropyloxy)phenyl)propane, le composant (2) est l'éther diglycidylique de bisphenol A et le composant (3) est le bisphenol A.

**12.** Composition durcissable à la chaleur qui comprend la résine époxy à chaînes allongées de la revendication 1 et un agent durcissant.

**13.** Composition durcissable à la chaleur de la revendication 12, dans laquelle ledit agent durcissant est une résine mélamine-formaldehyde, une résine urée-formaldéhyde ou une résine phénol-formaldéhyde.

**14.** Procédé de préparation des produits de réticulation par chauffage de la composition durcissable de la revendication 12.